# Europäisches Patentamt
# European Patent Office
# Office européen des brevets

(19)

(11) Numéro de publication: **0 260 166 B1**

(12)

# FASCICULE DE BREVET EUROPEEN

(45) Date de publication du fascicule du brevet:
**28.11.90**

(21) Numéro de dépôt: **87401820.3**

(22) Date de dépôt: **06.08.87**

(51) Int. Cl.⁵: **F16J 12/00**
**// B01J7/00, F16K31/40,**
**B60R21/16, B64D7/08**

(54) **Dispositif de bouteille formant récipient de gaz sous pression.**

(30) Priorité: **08.08.86 FR 8611499**

(43) Date de publication de la demande:
**16.03.88 Bulletin 88/11**

(45) Mention de la délivrance du brevet:
**28.11.90 Bulletin 90/48**

(84) Etats contractants désignés:
**DE ES GB IT**

(56) Documents cités:
**EP-A- 0 004 595**
**FR-A- 719 226**
**FR-A- 2 104 587**
**FR-A- 2 275 715**
**US-A- 3 496 925**
**US-A- 3 757 821**

(73) Titulaire: **R. ALKAN & Cie., Rue du 8 mai 1945,**
**F-94460 Valenton(FR)**

(72) Inventeur: **Coutin, Pierre, 117 avenue Général Michel**
**Bizot, F-75012 Paris(FR)**

(74) Mandataire: **Hud, Robert, Cabinet COLLIGNON 6, rue de**
**Madrid, F-75008 Paris(FR)**

ACTORUM AG

## Description

L'invention se situe dans le domaine des composants pneumatiques ou hydrauliques, en particulier soupapes et vérins, et elle s'applique surtout à leur utilisation en aéronautique, bien qu'elle soit applicable aussi dans les domaines des navires et des engins terrestres, par exemple pour obtenir des vidanges rapides de capacités sous forte pression et pour des expulsions rapides de panneaux ou ouvertures de sécurité, y compris les évacuateurs de fumée des immeubles.

Les problèmes relatifs à l'obtention d'une ouverture rapide de grande section ainsi qu'à la création d'une poussée puissante et rapide d'objets, par exemple de charges emportées sous avions ou bien de panneaux de protection, ont été résolus jusqu'ici principalement par emploi de dispositifs pyrotechniques créant instantanément de fortes pressions de gaz de volume suffisant, en particulier pour pousser directement ou indirectement des vérins en contact avec l'objet à repousser.

L'emploi de bouteilles de gaz comprimé est cependant souhaité pour des raisons de sécurité, de propreté et de maintenance. Il s'est toutefois peu répandu jusqu'ici parce que les vannes connues soit nécessitent une énergie d'ouverture considérable, soit ne procurent qu'un débit faible parce que leur ouverture n'est pas assez rapide. En outre, elles peuvent fuir peu à peu.

Par le document EP-A 0 004 595 on connait une vanne pour installation d'extinction d'incendie, avec un corps de vanne ayant une ouverture d'évacuation sur laquelle peut s'appuyer de façon étanche un piston de vanne. Ce dernier délimite, avec le corps de vanne et avec un fond fermé solidaire de celui-ci, une petite capacité qui communique par une faible ouverture avec le conduit d'amenée. La petite capacité comporte un orifice dont l'ouverture fait chuter la pression à l'intérieur de cette capacité et oblige le piston à s'écarter de l'ouverture d'évacuation sous l'action de la pression dans le conduit d'amenée.

La présente invention permet de construire un ensemble intégré bouteille-vanne de poids et d'encombrement minimes, et qui peut également contenir le vérin à l'intérieur de la bouteille de gaz comprimé.

Le dispositif de vanne utilisé par l'invention comporte de façon connue un espace d'entrée de fluide sous pression en amont du siège d'étanchéité qui délimite l'ouverture de vidange, avec une soupape pouvant s'appuyer sur la face amont du siège pour l'obturer.

La soupape est fixée directement à un piston se déplaçant dans l'espace d'entrée et constitué essentiellement d'un disque d'un diamètre plus grand que celui du siège d'étanchéité. Le disque est guidé dans un alésage de l'espace d'entrée avec un jeu assez faible pour délimiter une petite capacité de volume variable entre lui-même, l'alésage et un fond fermant celui-ci.

Enfin la cavité comporte un clapet-pilote susceptible de vidanger la petite capacité.

Sous une pression établie, le fluide communique par le jeu ménagé entre le disque et l'alésage, et éventuellement par un petit orifice, par exemple un trou de très faible diamètre, entre l'espace d'entrée et la petite capacité, jusqu'à équilibre des pressions. Le fluide appuie la soupape sur le siège, formant un ensemble autoclave. Par mise en action du clapet-pilote la petite capacité fermée se vide, la fuite qui s'effectue par le jeu et/ou le petit orifice étant minime. La pression dans l'espace d'entrée soulève alors disque et soupape et le siège est alimenté directement en fluide, jusqu'à vidange partielle ou complète de la bouteille suivant le temps de mise en action du clapet-pilote.

L'espace d'entrée de fluide, raccordé au siège d'étanchéité de la soupape, est constitué par la bouteille de gaz sous pression.

Le dispositif de bouteille selon l'invention formant récipient de gaz sous pression présente une ouverture d'evacuation avec un siège d'étanchéité sur lequel peut s'appuyer une soupape, laquelle est reliée rigidement à un disque guidé dans un alésage concentrique avec un fond fermé limitant avec le disque une petite capacité, une fuite minime existant entre celle-ci et la bouteille, et cette petite capacité comportant un orifice pouvant être fermé par un clapet pilote dont l'ouverture fait chuter la pression dans la petite capacité en obligeant la soupape à s'écarter d'avec le siège sous l'action de la pression du gaz dans la bouteille, et ce dispositif se caractérise en ce qu'une extrémité de la bouteille constitue l'alésage de la petite capacité et en ce que ladite extrémité porte un raccord de gonflage de la bouteille de sorte que le gonflage contribue à appuyer la soupape sur son siège.

Le siège d'étanchéité de la soupape peut constituer l'extrémité d'un cylindre de vérin qui est concentrique à l'alésage de guidage du disque, l'ouverture de la soupape commandant l'actionnement du vérin, lequel peut être intérieur à la bouteille de gaz sous pression.

Selon une forme de réalisation, le clapet-pilote est disposé à l'intérieur de la petite capacité et il coopère avec un orifice-pilote ménagé au centre du disque. Un électro-aimant, également disposé à l'intérieur de la petite capacité, agit contre l'action d'un ressort pour ouvrir le clapet-pilote.

Pour bien faire comprendre le dispositif selon l'invention on en décrira ci-après, à titre d'exemples sans caractère limitatif, deux formes d'exécution préférées en référence au dessin schématique annexé dans lequel :

- la figure 1 représente une coupe verticale axiale d'un premier exemple de réalisation de l'invention, appliquée à un ensemble séparable de bouteille de gaz comprimé ; et
- la figure 2 est une coupe verticale axiale d'un second exemple de réalisation de l'invention, appliquée à la commande d'un vérin de poussée.

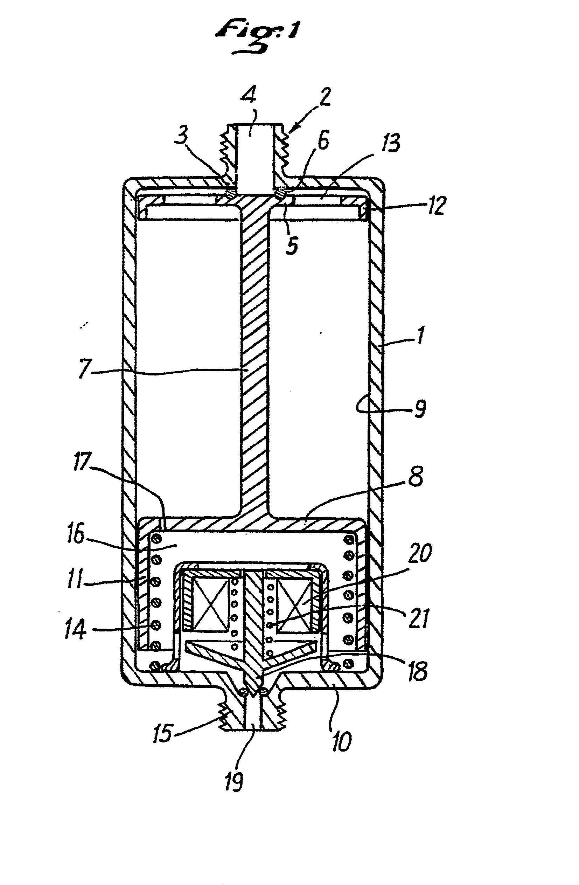

A la figure 1, la bouteille 1 représentée est un corps cylindrique avec un raccord aval 2 destiné à être relié à un organe d'utilisation (non figuré). Un siège 3 entoure l'orifice 4 du raccord 2 et coopère avec une soupape 5 qui peut porter un joint d'étanchéité 6 en élastomère. La soupape 5 est fixée par une tige 7 à un disque 8 coulissant à faible jeu dans l'alésage 9 de la bouteille 1 au voisinage du fond 10 de celle-ci. Le disque 8 est prolongé le long de l'alésage 9 par une jupe de guidage et/ou d'étanchéité 11. De son côté la soupape 5 est guidée de manière connue, par exemple au moyen d'un guide concentrique 12 porté par des bras 13 et coulissant dans la bouteille . Un ressort 14, disposé entre le fond 10 et le disque 8, tend à appuyer la soupape 5 sur son siège 3.

Un raccord de gonflage 15 est fixé sur le fond 10, en permettant l'introduction de gaz sous pression dans la capacité de volume variable 16 formée entre le disque 8, l'alésage 9 et le fond 10.

Un petit orifice, sous forme d'un trou 17 de faible diamètre ménagé dans le disque 8, permet au gaz introduit par le raccord 15 de remplir peu à peu l'ensemble de la bouteille 1 de part et d'autre du disque 8. En cours et en fin de remplissage, la pression du fluide s'ajoute à la force du ressort 14 pour appuyer la soupape 5 sur son siège 3.

Un clapet antiretour 18 sur l'orifice 19 du raccord de gonflage 15 sert de clapet-pilote pour la commande d'ouverture . A cet effet, le clapet 18 est soulevé par l'action d'un électro-aimant 20. Un ressort 21 tend au contraire à refermer le clapet 18 lorsque l'électro-aimant 20 n'est pas excité . Lorsque, après gonflage, le raccord 15 est remis à l'air libre, par mise en action de l'électro-aimant 20, la capacité 16 se vide brusquement et la pression régnant dans le reste de la bouteille 1 repousse énergiquement le disque 8, écartant très rapidement la soupape 5 de son siège 3 ce qui assure la vidange par l'orifice 4 tant que l'électro-aimant 20 reste actionné, le clapet 18 étant assez court pour ne pas être repoussé par le disque 8..

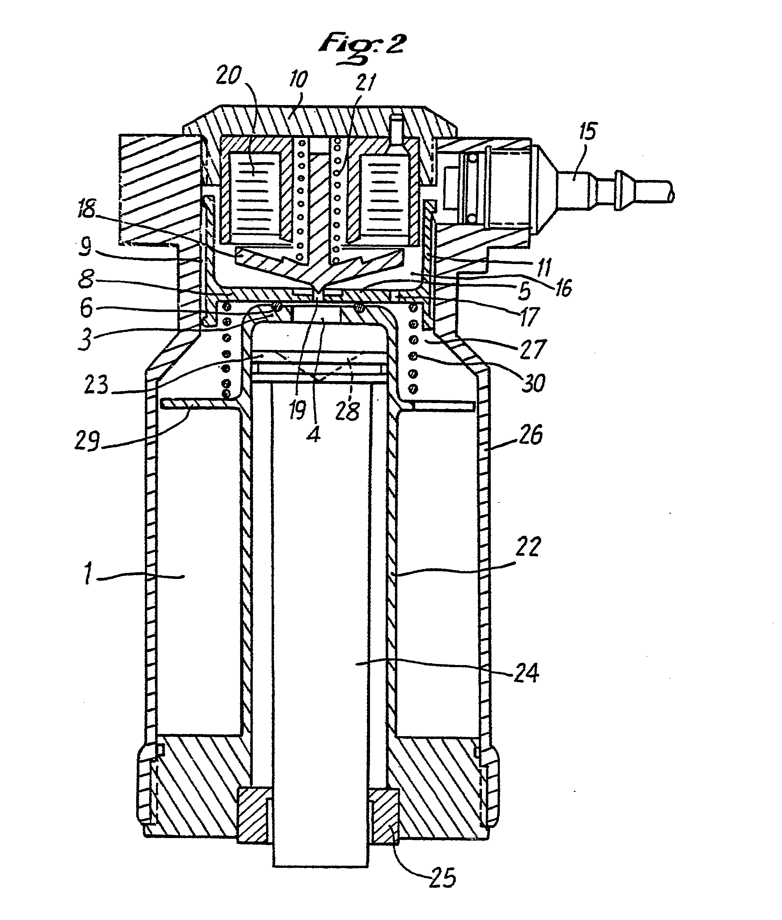

On décrira maintenant l'exemple d'exécution représenté à la figure 2 dans laquelle on a utilisé les mêmes repères qu'à la figure 1 pour désigner les éléments de même fonction.

On a représenté en 22 le cylindre d'un vérin de poussée, guidant la tête 23 d'un piston mobile qui reçoit la pression du fluide moteur et dont la tige 24 dépasse au-delà d'un guidage 25 pour actionner l'objet à manoeuvrer (non représenté au dessin). L'extrémité du cylindre 22, du côté de la tête de piston 23, est rétrécie en 3 pour former un siège d'étanchéité avec un joint 6 en élastomère étanche disposé autour d'une ouverture de grande section 4.

La vanne selon l'invention comporte un disque 8, dont la partie centrale 5 formant soupape peut venir en contact avec le joint 6 pour fermer l'ouverture, et ce disque peut coulisser à faible jeu dans un alésage 9, formé par un rétrécissement de la virole 26 d'une bouteille 1, et attenant à un fond 10 vissé sur lui et concentrique avec le cylindre 22. Le disque 8 est prolongé, à l'intérieur de l'alésage 9, par une jupe de guidage 11.

Un clapet-pilote 18 coopère avec un orifice pilote 19 ménagé au centre du disque 8. Le clapet 18 est soulevé par l'action d'un électro-aimant 20 qui remplit presque entièrement la capacité 16, définie entre le fond 10 et le disque 8, et dont la course est assez longue pour ne pas limiter le mouvement de ce dernier. Un ressort 21 s'appuyant contre le fond fermé 10 vient pousser au repos le clapet-pilote 18 contre l'orifice 19 pour fermer celui-ci. Cet appui est augmenté par la pression de gonflage appliquée au dispositif, de sorte que l'étanchéité réalisée est excellente tant au niveau de ce clapet-pilote qu'au niveau du siège principal 3.

Comme on le voit, la surface totale du disque 7 est nettement supérieure à celle de sa partie centrale 5. D'autre part, l'alésage 9 est raccordé à la virole 26 qui constitue, avec l'extérieur du siège 3, une canalisation annulaire 27 d'entrée dans la soupape. La virole 26 reçoit elle-même par vissage le cylindre 22, au voisinage du guidage 25, pour constituer la bouteille 1 pouvant emmagasiner le gaz moteur.Celui-ci est introduit par un raccord de gonflage 15, qui débouche dans la petite capacité 16 déterminée par le fond 10, l'alésage 9 et le disque 8.

Lors du gonflage, c'est-à-dire lors de l'apport de gaz par le raccord 15, le clapet-pilote 18 repose sur l'orifice 19, obture celui-ci et appuie le disque 8 sur le siège 3. Le gaz appuie de plus en plus le disque 8 contre le siège 3, fermant l'ouverture 4 associée, et le cylindre 22 du vérin reste à la pression ambiante. Simultanément le gaz s'infiltre dans le faible jeu ménagé entre l'alésage 9 et le disque 8 pour remplir la bouteille 1 à la pression voulue. Si ce jeu s'avère trop faible, rendant le remplissage de la bouteille 1 trop long, un petit trou 17 ménagé à travers le disque 8, permet d'augmenter le débit de remplissage.

On décrira maintenant le fonctionnement, après remplissage, du dispositif selon la figure 2. On procéde à la mise sous tension électrique de l'électro-aimant 20 qui écarte le clapet-pilote 18 de l'orifice 19, lequel offre une section de passage bien plus grande que les fuites ménagées autour de la jupe de guidage 11 du disque 8 augmentées éventuellement de celles à travers le petit trou 17. De ce fait le débit de gaz à travers l'orifice 19 vidange partiellement la petite capacité 16, tout en pénétrant dans le cylindre 22 dont le volume mort peut être augmenté par une petite cavité borgne 28 ménagée dans la tête de piston 23. Simultanément la pression de gaz dans la bouteille 1 s'exerce sur toute la surface du disque 8 extérieure à sa partie centrale 5. Le disque 8 se soulève alors brusquement en découvrant le siège 3, et le piston 23 du vérin est actionné énergiquement par le gaz sous pression venant de la bouteille 1 par la canalisation 27. La rapidité d'action est d'autant plus grande que la capacité 16 est petite et que l'orifice-pilote 19 est grand.

A la coupure de la tension d'alimentation de l'électro-aimant 20, l'orifice 19 est refermé par le clapet-pilote 18 sous l'action du ressort 21, et la pression qui remonte dans la capacité 16, jointe à la force du ressort 21, applique le disque 8 sur le siège 3 en refermant la soupape. La pression résiduelle dans la bouteille 1 permet alors, ultérieurement, une nouvelle utilisation du vérin.

D'autre part on a prévu un ressort 30, moins puissant que le ressort 21, qui s'appuie sur le cylindre 22 et tend à maintenir soulevé le disque 8 pour éviter que celui-ci puisse retomber sur le siège 3 au cours du mouvement moteur du vérin. Par ailleurs, des ailettes 29 du cylindre 22 servent à maintenir celui-ci bien centré à l'intérieur de la bouteille 1.

On notera qu'avec les diverses modalités de la réalisation décrite, on est garanti au mieux contre toute fuite intempestive, même en cas de stockage de longue durée. En effet, le disque de soupape 8 et le clapet-pilote 18 sont autoclaves, étant appuyés par la pression.

En variante, on peut remplacer l'action de vidange du clapet-pilote 18 par une réouverture à l'air libre, par un moyen extérieur, du raccord de remplissage 15 ou par tout autre moyen équivalent. Dans ce cas, l'électro-aimant 20, le clapet-pilote 18 et l'orifice 19 peuvent être supprimés. On peut aussi les conserver pour établir une redondance de la commande du dispositif.

On remarquera également que l'ensemble formé par la bouteille et son dispositif d'ouverture, qu'il possède ou non un vérin incorporé, est réutilisable sans qu'aucun élément ne soit à remplacer après usage. Suivant l'emplacement et la méthode d'utilisation qui lui sont dévolus, cet ensemble peut être gonflé à poste, ou déposé pour ce faire puis remis à poste.

D'autre part, comme dans les deux exemples représentés, l'ensemble du dispositif est inclus à l'intérieur même de la bouteille, ce qui lui donne de ce fait une compacité maximale, une grande facilité d'emploi et de stockage, ainsi qu'une excellente protection contre les agents extérieurs.

On comprendra que la description ci-dessus a été donnée à simple titre d'exemple, sans caractère limitatif, et que des adjonctions ou des modifications constructives pourraient y être apportées sans sortir du cadre de l'invention définie par les revendications qui suivent.

**Revendications**

1. Dispositif de bouteille formant récipient de gaz sous pression, ayant une ouverture (4) d'évacuation avec un siège d'étanchéité (3) sur lequel peut s'appuyer une soupape (5), ladite soupape étant reliée rigidement à un disque (8) guidé dans un alésage concentrique (9) avec un fond fermé (10) limitant avec le disque une petite capacité (16), une fuite minime existant entre celle-ci et la bouteille, et cette petite capacité comportant un orifice (19) dont l'ouverture fait chuter la pression dans la petite capacité en obligeant la soupape (5) à s'écarter d'avec le siège (3) sous l'action de la pression du gaz dans la bouteille dont une extrémité constitue l'alésage (9) de la petite capacité (16), caractérisé en ce que l'orifice (19) de la petite capacité (16) peut être fermé par un clapet pilote (18) et en ce que ladite petite capacité (16) porte un raccord (15) de gonflage de la bouteille de sorte que le gonflage contribue à appuyer la soupape (5) sur son siège (3).

2. Dispositif selon la revendication 1, caractérisé en ce que le siège (3) constitue l'extrémité du cylindre (22) d'un vérin pouvant être actionné par la pression du gaz.

3. Dispositif selon la revendication 2, caractérisé en ce que le piston (24) du vérin comporte un volume mort augmenté par une cavité borgne (28) pour vidanger partiellement la petite capacité (16) à travers le clapet-pilote (18).

4. Dispositif selon l'une quelconque des revendications 1 à 3 caractérisé en ce que le clapet-pilote (18) sert de clapet anti-retour sur l'orifice (19) du raccord (15) de gonflage.

5. Dispositif selon l'une quelconque des revendications précédentes, caractérisé par une redondance de la commande d'ouverture du dispositif au moyen d'un clapet-pilote (18) à commande électromagnétique (20), et d'un moyen extérieur d'ouverture à l'air libre du raccord de remplissage (15).

**Patentansprüche**

1. Vorrichtung an einer einen Druckgasbehälter bildenden Flasche, enthaltend eine Entleerungsöffnung (4) mit einem Dichtsitz (3), gegen den ein Ventil (5) drückbar ist, wobei das Ventil starr mit einer Scheibe (8) verbunden ist, die in einer konzentrischen Bohrung (9) mit einem geschlossenen Boden (10) geführt ist, der mit der Scheibe einen kleinen Hohlraum (16) bildet, wobei ein minimales Leck zwischen diesem Hohlraum und der Flasche besteht und wobei dieser kleine Hohlraum eine Öffnung aufweist, bei deren Öffnen der Druck in dem kleinen Hohlraum zusammenbricht, wodurch das Ventil (5) gezwungen wird, von seinem Sitz (3) unter der Wirkung des Gasdruckes in der Flasche abzuheben, deren eines Ende die Bohrung (9) des kleinen Hohlraumes (16) bildet, dadurch gekennzeichnet, daß die Öffnung (19) des kleinen Hohlraumes (16) durch ein Steuerventil (18) verschließbar ist und daß dieser Hohlraum (16) einen Aufblasstutzen (15) für die Flasche derart bildet, daß das Aufblasen dazu beiträgt, das Ventil (5) auf seinen Sitz (3) zu drücken.

2. Vorrichtung nach Anspruch 1, dadurch gekennzeichnet, daß der Sitz (3) das Ende des Zylinders (22) einer durch den Druck des Gases betätigbaren Zylinder-Kolben-Anordnung bildet.

3. Vorrichtung nach Anspruch 2, dadurch gekennzeichnet, daß der Kolben (24) der Zylinder-Kolben-Anordnung ein Totvolumen enthält, das durch eine Sackbohrung (28) vergrößert ist, um den kleinen Hohlraum (16) teilweise durch das Steuerventil (18) zu entleeren.

4. Vorrichtung nach einem der Ansprüche 1 bis 3, dadurch gekennzeichnet, daß das Steuerventil (18) als Rückschlagventil auf der Öffnung (19) des Aufblasstutzens (15) dient.

5. Vorrichtung nach einem der vorhergehenden Ansprüche, gekennzeichnet durch eine Redundanz der Steuerung des Öffnens der Vorrichtung mittels des Steuerventiles (18) mit elektromagnetischer Steuerung (20) und durch eine äußere Einrichtung zum Öffnen des Aufblasstutzens (15) ins Freie.

**Claims**

1. A bottle device serving as a receptacle for pressurised gas and having an outlet orifice (4) with a sealing-tight seat (3) on which a valve (5) is adapted to bear, the said valve being rigidly connected to a disc (8) guided in a bore (9) which is concentric with a closed bottom (10) defining with the disc a small space (16), a minimal leakage existing between the latter and the bottle, this small space comprising an orifice (19) the aperture in which causes the pressure in the small space to drop, compelling the valve (5) to move away with the seat (3) under the action of the pressure of the gas in the bottle, one end of which constitutes the bore (9) of the small space (10), characterised in that the orifice (19) of the small space (16) tan be closed by a pilot valve (18) and in that the said small space (16) carries a connection (15) for inflating the bottle so that the inflation contributes to applying the valve (5) against its seat (3).

2. A device according to claim 1, characterised in that the seat (3) constitutes the end of the cylinder (22) of a jack adapted to be operated by the gas pressure.

3. A device according to claim 2, characterised in that the piston (24) of the jack comprises a dead space enhanced by a blind cavity (28) for partially draining the small space (16) through the pilot valve (18).

4. A device according to any one of claims 1 to 3, characterised in that the pilot valve (18) serves as a nonreturn valve on the orifice (19) of the inflation connection (15).

5. A device according to any one of the preceding claims, characterised by a redundancy of the control to open the device by means of a pilot valve (18) with an electromagnetic control means (20), and an external means of opening the filling connection (15) to the free air.

*Fig:1*

*Fig. 2*